# EUROPÄISCHE PATENTANMELDUNG

(11) **EP 3 121 531 A1**
(43) Veröffentlichungstag der Anmeldung: **25.01.2017**
(21) Anmeldenummer: 16179155.3
(22) Anmeldetag: 13.07.2016
(51) Int. Cl.: F24J 2/46, F24J 2/52

(54) **MONTAGESYSTEM FÜR SOLARMODUL**

(30) Priorität: 13.07.2015 AT 506152015
(71) Anmelder: Holleis-Wiesinger, Georg Rudolf, 4273 Unterweißenbach (AT)
(72) Erfinder: Holleis-Wiesinger, Georg Rudolf, 4273 Unterweißenbach (AT)
(74) Vertreter: Burger, Hannes

(57) **Zusammenfassung**

Die Erfindung betrifft ein Montagesystem (2) zur Montage eines Solarmoduls (1) an einer Dachfläche, das Montagesystem (2) umfassend:
eine erste Profilschiene (3), wobei mittig der ersten Profilschiene (3) eine Befestigungsvertiefung (8) ausgebildet ist, welche Befestigungsvertiefung (8) durch einen ersten Modulauflagebereich (11) und einen zweiten Modulauflagebereich (12) begrenzt ist, und wobei beidseitig an der von der Befestigungsvertiefung (8) abgewandten Seite der beiden Modulauflagebereiche (11) jeweils zumindest eine Regenwasserrinne (14) und eine Profilschienenauflagefläche (15) für eine zweite Profilschiene (4) ausgebildet ist;
die zweite Profilschiene (4) ist in einem Winkel (5) von 90° zur ersten Profilschiene (3) anordenbar. Die zweite Profilschiene (4) weist einen gegenüber der Modulauflagefläche (24) vorstehenden Modulanschlagsteg (25) auf. Beidseitig des Modulanschlagsteges (25) ist zumindest ein Regenwasserkanal (26) ausgebildet.

## Beschreibung

Die Erfindung betrifft ein Montagesystem zur Montage eines Solarmoduls an einer Dachfläche, insbesondere wenn das Solarmodul als Ersatz für Dachziegeln dienen soll.

Aus der FR 2 999 362 A1 ist ein Montagesystem zur Montage eines Solarkollektors an einer Dachfläche bekannt. Das Montagesystem weist eine erste Profilschiene auf, welche erste Profilschiene von der oberen Dachkannte, auch First genannt, zur unteren Dachkannte, auch Traufe genannt, verläuft. Die erste Profilschiene ist direkt an der Dachfläche befestigt. Weiters weist das Montagesystem eine zweite Profilschiene auf, welche an der ersten Profilschiene aufliegt. Die zweite Profilschiene ist U-Förmig ausgebildet, wobei die zweite Profilschiene derart an der ersten Profilschiene aufliegt, dass die offene Seite der U-Förmigen zweiten Profilschiene der ersten Profilschiene abgewandt ist. Die Solarkollektoren liegen an den beiden Schenkeln der zweiten Profilschiene auf. Die zweite Profilschiene dient dazu um Regenwasser zu sammeln und in die erste Profilschiene einzuleiten. Weiters ist ein Aufsetzteil vorgesehen, welches außenseitig der Solarkollektoren parallel zur zweiten Profilschiene verlaufend zwischen die Solarkollektoren eingesetzt wird.

Die Ausführung des Montagesystems der FR 2 999 362 A1 weist den Nachteil auf, dass die zweite Profilschiene nur unzureichend genau im Bereich des Spaltes zwischen zwei Solarkollektoren platziert werden kann und dass durch die gezeigte Ausgestaltung von zweiter Profilschiene und Aufsetzteil die Montagezeit erheblich verlängert wird.

Der vorliegenden Erfindung liegt die Aufgabe zugrunde ein Montagesystem zu schaffen, welches einfach zu montieren ist.

Diese Aufgabe der Erfindung wird durch ein Montagesystem gemäß dem Anspruch 1 gelöst.

Erfindungsgemäß ist ein Montagesystem zur Montage eines Solarmoduls ausgebildet, welches folgende Bauteile umfasst:
eine erste Profilschiene, welche im Wesentlichen symmetrisch bezüglich einer Symmetrieebene ausgebildet ist, wobei mittig der ersten Profilschiene eine Befestigungsvertiefung ausgebildet ist, welche Befestigungsvertiefung durch einen ersten Modulauflagebereich und einen zweiten Modulauflagebereich begrenzt ist, und wobei beidseitig an der von der Befestigungsvertiefung abgewandten Seite der beiden Modulauflagebereiche jeweils zumindest eine Regenwasserrinne und eine Profilschienenauflagefläche für eine zweite Profilschiene ausgebildet ist;
die zweite Profilschiene welche in einem Winkel von 90° zur ersten Profilschiene anordenbar ist, wobei die zweite Profilschiene eine Schienenauflagefläche aufweist welche zur Auflage der zweiten Profilschiene an der ersten Profilschiene ausgebildet ist und weiters eine Modulauflagefläche aufweist, welche zur Aufnahme des Solarmoduls ausgebildet ist. Die zweite Profilschiene weist einen gegenüber der Modulauflagefläche vorstehenden Modulanschlagsteg auf. Beidseitig des Modulanschlagsteges ist zumindest ein Regenwasserkanal ausgebildet ist.

Von Vorteil an der erfindungsgemäßen Ausbildung ist, dass durch den Modulanschlagsteg die zweite Profilschiene zwischen zwei zueinander benachbarten Solarmodulen aufgenommen werden kann. Dabei ist es nicht zwingend erforderlich, dass die zweite Profilschiene an der Dachfläche bzw. an der ersten Profilschiene befestigt wird, sondern kann eine ausreichend genaue Positionierung der zweiten Profilschiene über Klemmung des Modulanschlagsteges zwischen den beiden Solarmodulen erreicht werden. Bei der Montage von Solarmodulen mittels dem erfindungsgemäßen Montagesystem kann somit eine Zeitersparnis erreicht werden, da die zweite Profilschiene nur zwischen zwei Module eingelegt werden muss. Durch die erfindungsgemäße Formgebung der beiden Profilschienen kann darüber hinaus erreicht werden, dass Regenwasser, welches durch die Spalte zwischen zwei Modulen hindurchgelangt, gut in den Regenwasserkanälen der beiden Profilschienen abgeführt werden kann und die Solarmodule zusammen mit dem Montagesystem als Ersatz für die Dacheindeckung dienen können. Das Montagesystem eignet sich unter anderem zur Montage von Solarmodulen an einer Dachfläche, an einer Fassade, an einem Gestell eines nachgeführten Systems usw. Dabei können auch ganze Dachflächen mit Solarmodulen unter Verwendung eines derartigen Montagesystems eingedeckt werden. Außerdem können die Solarmodule zusammen mit dem Montagesystem auch als Dachfläche ausgebildet sein.

Weiters kann es zweckmäßig sein, dass die Modulauflagefläche der zweiten Profilschiene durch einen ersten Schenkel und einen zweiten Schenkel gebildet sind, welche beiden Schenkel im rechten Winkel an den Modulanschlagsteg anschließen. Vorteilhaft ist hierbei, dass durch diese Ausprägung die Solarmodule ausreichend abgestützt werden, sodass auch bei erhöhter Belastung, beispielsweise durch Wind oder Schnee, ein möglicher Bruch von Solarmodulen hintangehalten werden kann.

Ferner kann vorgesehen sein, dass in der Befestigungsvertiefung der ersten Profilschiene zumindest zwei Befestigungsvorsprünge für zwei verschiedene Arten von Befestigungsmitteln ausgebildet sind. Von Vorteil ist hierbei, dass verschiedene am Markt erhältliche Befestigungsschrauben in der Befestigungsvertiefung verankert werden können, um ein Solarmodul am Montagesystem zu befestigen. Dadurch ist die Befestigungsvertiefung universell einsetzbar und kann mit verschiedenen Befestigungsschrauben verwendet werden.

Darüber hinaus kann vorgesehen sein, dass beidseitig der Befestigungsvertiefung der ersten Profilschiene jeweils neben der Regenwasserrinne eine weitere Regenwasserrinne ausgebildet ist. Von Vorteil ist hierbei, dass durch den zweiten, zusätzlichen Regenwasserkanal eine Redundanz geschaffen werden kann, sodass bei Überfüllung des ersten Regenwasserkanals durch ein Starkregenereignis erreicht werden kann, dass kein Regenwasser in das Innere des Daches eindringt.

Vorteilhaft ist auch eine Ausprägung, gemäß welcher vorgesehen sein kann, dass an der zweiten Profilschiene an der gegenüberliegenden Seite des Modulanschlagsteges eine Versteifungsrippe angeordnet ist. Durch die Versteifungsrippe wird der zweiten Profilschiene zusätzliche Stabilität verliehen. Dadurch kann die Bruchgefährdung der Solarmodule weiter vermindert werden.

Gemäß einer Weiterbildung ist es möglich, dass am Modulauflagebereich der ersten Profilschiene eine Verzahnung ausgebildet ist. Dabei ist insbesondere von Vorteil, dass durch die Verzahnung der Halt der Solarmodule am Montagesystem verbessert werden kann. Dadurch kann auch bei auftretenden Querkräften erreicht werden, dass die Solarmodule nicht relativ zum Montagesystem verrutschen.

Ferner kann es zweckmäßig sein, dass der Modulanschlagsteg an dessen von der zweiten Profilschiene abgewandten Ende eine T-Förmig ausgebildete Nase aufweist. Dabei ist von Vorteil, dass durch die Nase die Module in Position gehalten werden können. Darüber hinaus kann durch die Nase erreicht werden, dass das Modul von Profilradien des Modules beabstandet wird.

Darüber hinaus kann vorgesehen sein, dass an zumindest einer Seitenfläche des Modulanschlagsteges ein Dichtband angeordnet ist. Durch das Dichtband kann erreicht werden, dass die Menge an Regenwasser, welches zwischen zwei zueinander benachbarten Solarmodulen eintritt, möglichst gering gehalten werden kann. Darüber hinaus kann das Dichtband eine Art Dämpfung zwischen zwei Modulen bilden, um die Module zu schonen.

Weiters kann vorgesehen sein, dass im zusammengebauten Zustand der Modulauflagebereich der ersten Profilschiene und die Modulauflagefläche der zweiten Profilschiene in einer gemeinsamen Ebene liegen. Vorteilhaft ist hierbei, dass das zu befestigende Solarmodul an beiden Profilschienen gleichzeitig aufliegen kann und somit eine Beschädigung des Solarmoduls weitestgehend vermieden werden kann.

Gemäß einer besonderen Ausprägung ist es möglich, dass die beiden Profilschienen als Aluminium-Stranggussteile ausgebildet sind. Von Vorteil ist hierbei, dass Aluminiumstranggussteile in beliebiger Länge gefertigt werden können, wobei eine hohe Fertigungsgenauigkeit erreicht werden kann. Der Werkstoff Aluminium weist darüber hinaus eine geringe Dichte auf, sodass die Profile einfach zu handhaben sind.

In einer Alternativvariante kann auch vorgesehen sein, dass zumindest eine der beiden Profilschienen als Blechbiegeteil ausgeführt ist. Dies kann besonders von Vorteil sein, um verschiedene Formen der Profile einfach und kostengünstig ausbilden zu können, um die Formen an die Module anpassen zu können.

Ein Solarmodul im Sinne dieses Dokumentes umfasst sowohl ein thermisches Solarmodul zur Umwandlung von Sonnenenergie in Wärmeenergie, als auch ein Photovoltaikmodul zur Umwandlung von Sonnenenergie in elektrische Energie.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Montagesystems;
- Fig. 2: eine Detailansicht einer ersten Profilschiene des Montagesystems;
- Fig. 3: eine Detailansicht einer zweiten Profilschiene des Montagesystems;
- Fig. 4: ein weiteres Ausführungsbeispiel der zweiten Profilschiene;
- Fig. 5: ein weiteres Ausführungsbeispiel der ersten Profilschiene.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

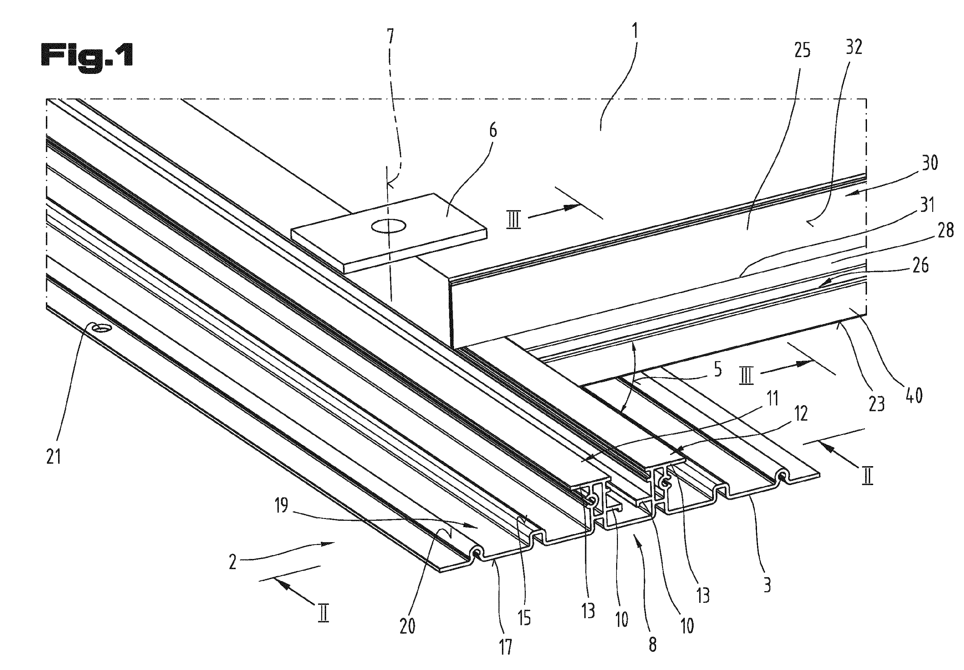

Fig. 1 zeigt eine perspektivische Ansicht von Solarmodulen 1, welche mittels einem Montagesystem 2 an einer Dachfläche befestigt sind.

Das Montagesystem 2 umfasst eine erste Profilschiene 3, welche an einer Lattung des Daches befestigt wird. Die erste Profilschiene 3 weist eine Längserstreckung auf, welche grundsätzlich beliebig groß gewählt werden kann. Dabei ist es denkbar, dass die erste Profilschiene 3 als Stangenware, insbesondere Stangen mit einer Länge von 6 Metern, gefertigt wird. Anschließend kann die erste Profilschiene 3 auf die richtige Länge gekürzt werden, um im Montagesystem 2 eingesetzt werden zu können. Die erste Profilschiene 3 ist vorzugsweise derart an einem Dach angeordnet, dass ihre Längserstreckung in Falllinie der Dachfläche verläuft.

Die zweite Profilschiene 4 ist bezüglich ihrer Längserstreckung in einem Winkel 5 von 90° zur ersten Profilschiene 3 angeordnet. Die zweite Profilschiene 4 liegt an der ersten Profilschiene 3 auf und unterstützt das Solarmodul 1.

Zur Befestigung der Solarmodule 1 an der Dachfläche, insbesondere an der ersten Profilschiene 3 kann vorgesehen sein, dass ein Befestigungselement 6 ausgebildet ist, welches durch ein Befestigungsmittel 7 in einer Befestigungsvertiefung 8 der ersten Profilschiene 3 gehalten wird. Insbesondere kann vorgesehen sein, dass das Solarmodul 1 zwischen Befestigungsmittel 7 und erster Profilschiene 3 bzw. zweiter Profilschiene 4 geklemmt ist. Das Befestigungsmittel 7 kann beispielsweise in Form einer Schraube ausgebildet sein. Das Befestigungselement 6 kann symmetrisch ausgebildet sein, wobei mittig des Befestigungselementes 6 eine Durchtrittsöffnung ausgebildet sein kann, durch welche das Befestigungsmittel 7 hindurchgeführt wird.

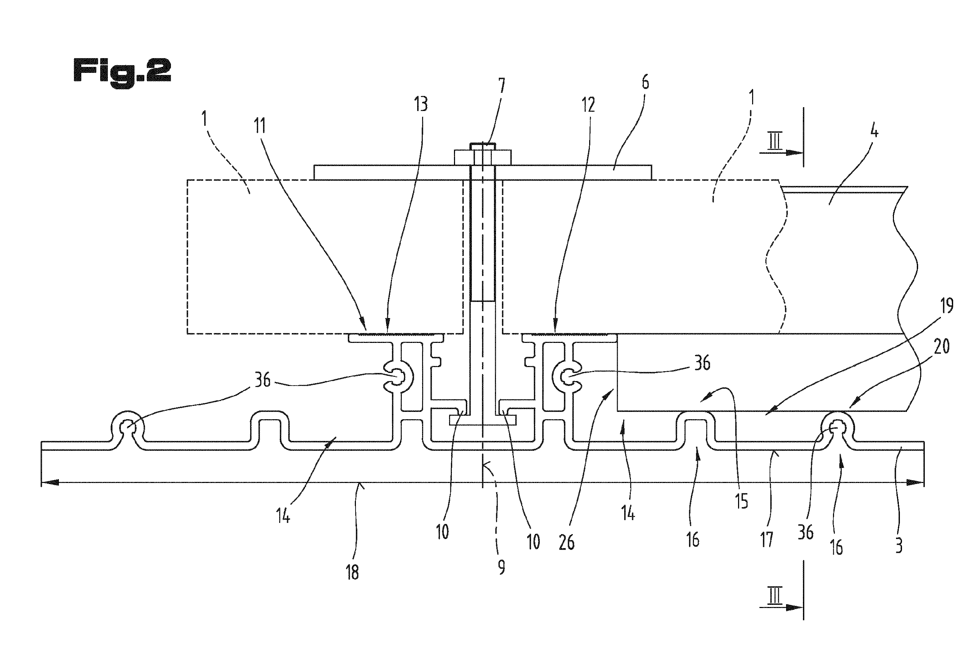

Fig. 2 zeigt das Montagesystem 2 in einer Schnittdarstellung gemäß der Schnittlinie II - II nach Fig. 1, wobei insbesondere der Querschnitt der ersten Profilschiene 3 ersichtlich ist. Für gleiche Teile werden wiederum gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen. Die folgende Beschreibung basiert auf einer Zusammenschau der Figuren 1 und 2.

Wie aus Fig. 2 ersichtlich, kann vorgesehen sein, dass die erste Profilschiene 3 im Wesentlichen symmetrisch bezüglich einer Symmetrieebene 9 ausgebildet ist. Bei Profilschienen im Randbereich einer Modulfläche kann auch vorgesehen sein, dass die erste Profilschiene 3 nicht symmetrisch ausgebildet ist.

Die Befestigungsvertiefung 8 der ersten Profilschiene 3 ist vorzugsweise mittig der Symmetrieebene 9 angeordnet. Insbesondere kann vorgesehen sein, dass die Befestigungsvertiefung 8 U-förmig ausgebildet ist, wobei innerhalb der Befestigungsvertiefung 8 zumindest ein Paar an Befestigungsvorsprüngen 10 zum Verhaken und somit zum Aufnehmen des Befestigungsmittels 7 ausgebildet ist.

Weiters kann vorgesehen sein, dass mehrere dieser Befestigungsvorsprünge 10 ausgebildet sind, sodass verschiedenartig ausgebildete Befestigungsmittel 7 mit der Befestigungsvertiefung 8 zusammenwirken können. Weiters kann vorgesehen sein, dass die Befestigungsvertiefung 8 nicht U-förmig ausgebildet ist, sondern dass diese eine andere Form aufweist. Beispielsweise kann vorgesehen sein, dass die Befestigungsvertiefung 8 sich nach oben hin verjüngend oder nach oben hin erweiternd ausgebildet ist.

Weiters ist vorgesehen, dass links und rechts der Symmetrieebene 9 an die Befestigungsvertiefung 8 anschließend ein erster Modulauflagebereich 11 und ein zweiter Modulauflagebereich 12 ausgebildet sind. Wie aus Fig. 2 besonders gut ersichtlich, wird das Solarmodul 1, insbesondere zwischen dem Befestigungselement 6 und dem ersten Modulauflagebereich 11 bzw. dem zweiten Modulauflagebereich 12 geklemmt. Durch diese Klemmung wird das Solarmodul 1 mittels dem Montagesystem 2 in seiner Position fixiert und gehalten.

Da zwischen zwei zueinander benachbarten Solarmodulen 1 ein Spalt vorhanden ist, kann es vorkommen, dass bei einem Regenereignis Regenwasser durch diesen Spalt hindurchdringt und in die Befestigungsvertiefung 8 der ersten Profilschiene 3 gelangt. Die Befestigungsvertiefung 8 dient dabei gleichzeitig als Rinne zur Abfuhr von Regenwasser. Das Regenwasser wird hierbei der Dachschräge folgend in Richtung zur Traufe des Daches geleitet.

Weiters kann vorgesehen sein, dass im Modulauflagebereich 11, 12 der ersten Profilschiene 3 eine Verzahnung 13 ausgebildet ist, welche dazu dient, um die kraftschlüssige Verbindung durch das Befestigungselement 6 weiter zu verbessern.

Weiters ist vorgesehen, dass außerhalb des Modulauflagebereiches 11, 12, daher an der von der Befestigungsvertiefung 8 abgewandten Seite der ersten Profilschiene 3 beidseitig eine Regenwasserrinne 14 ausgebilet ist, welche ebenfalls zur Abfuhr von Regenwasser dient. Die Regenwasserrinne 14 wird an der zentrumsnahen Seite vom Steg des Modulauflagebereiches 11, 12 und an der dem zentrumabgewandten Seite von einer Profilschienenauflagefläche 15 begrenzt.

Die Profilschienenauflagefläche 15 kann beispielsweise dadurch ausgebildet sein, dass die erste Profilschiene 3 eine wulstförmige Erhebung 16 aufweist. Insbesondere kann vorgesehen sein, dass an der Unterseite der ersten Profilschiene 3 eine ebene Dachauflagefläche 17 ausgebildet ist. Diese Dachauflagefläche 17 wird durch einige über die Breite 18 der ersten Profilschiene 3 verteilte Auflagepunkte gebildet. Dadurch kann die erste Profilschiene 3 satt am Dach bzw. an der Dachlattung aufliegen.

Weiters kann vorgesehen sein, dass in der ersten Profilschiene 3 neben der Regenwasserrinne 14 eine weitere Regenwasserrinne 19 ausgebildet ist. Natürlich kann auch vorgesehen sein, dass mehrere dieser weiteren Regenwasserrinnen 19 ausgebildet sind.

Außerdem ist es denkbar, dass eine weitere Profilschienenauflagefläche 20 ausgebildet ist, welche ebenfalls durch eine wulstförmige Erhebung 16 gebildet sein kann. Die weitere Regenwasserrinne 19 kann durch die Profilschienenauflagefläche 15 und die weitere Profilschienenauflagefläche 20 begrenzt sein.

Dabei ist es nicht zwingend erforderlich, dass die wulstförmige Erhebung 16 durch welche die erste Profilschienenauflagefläche 15 gebildet wird, gleich ausgeformt ist, wie die wulstförmige Erhebung 16 durch welche die weitere Profilschienenauflagefläche 20 ausgebildet ist. Weiters kann vorgesehen sein, dass die erste Profilschiene 3 mehrere Befestigungsausnehmungen 21 aufweist, mittels welchen die erste Profilschiene 3 am Dach befestigt werden kann.

Wie aus Fig. 2 weiters ersichtlich, kann vorgesehen sein, dass die erste Profilschiene 3 über den Querschnitt verteilt eine annähernd konstante Profilstärke 22 aufweist.

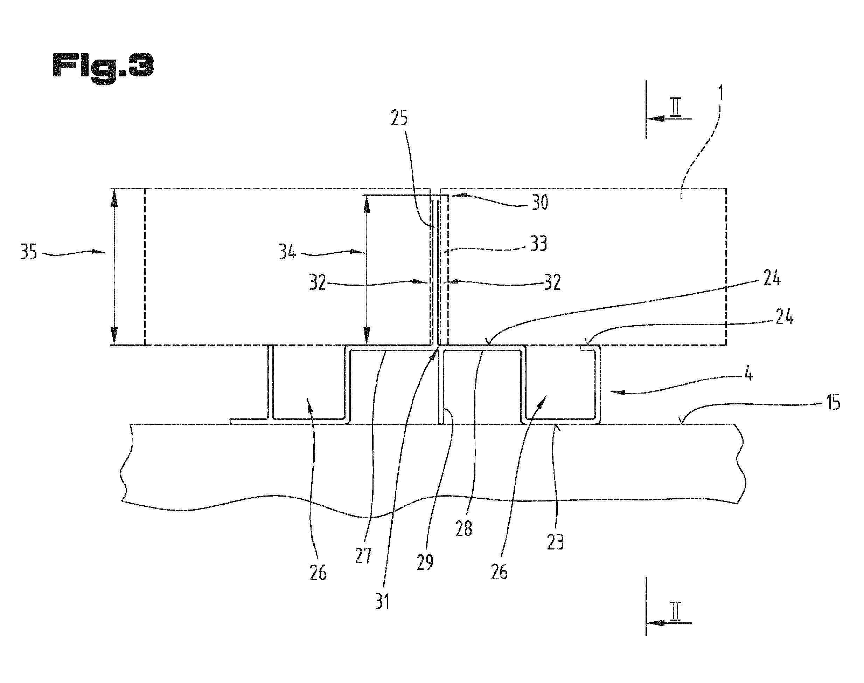

Wie besonders gut in einer Zusammenschau aus den Fig. 2 und 3 ersichtlich, ist vorgesehen, dass die zweite Profilschiene 4 an dessen Unterseite eine Schienenauflagefläche 23 aufweist, welche Schienenauflagefläche 23 an der Profilschienenauflagefläche 15 der ersten Profilschiene 3 aufliegt. Weiters weist die zweite Profilschiene 4 eine Modulauflagefläche 24 auf, an welchem das Solarmodul 1 aufliegt. Weiters ist an der zweiten Profilschiene 4 ein Modulanschlagsteg 25 ausgebildet, welcher im zusammengebauten Zustand des Montagesystem 2 zwischen zwei zueinander benachbarten Solarmodulen 1 aufgenommen ist.

Bei der Montage der Solarmodule 1 wird die zweite Profilschiene 4 lose auf die erste Profilschiene 3 aufgelegt und anschließend wird ein erstes Solarmodul 1 in die Profilschiene 4 eingelegt. In einem weiteren Montageschritt wird ein zweites Solarmodul 1 auf die zweite Profilschiene 4 gelegt und Richtung erstem, bereits eingelegten Solarmodul 1 gedrückt. Dadurch dient der Modulanschlagsteg 25 als Abstandhalter für zwei zueinander benachbarte Solarmodule 1. Gleichzeitig wird durch den Modulanschlagsteg 25 die zweite Profilschiene 4 zwischen zwei zueinander benachbarten Solarmodulen 1 geklemmt, sodass die Profilschiene 4 ortsfest geklemmt und positioniert ist.

Wie aus Fig. 1 ersichtlich, kann vorgesehen sein, dass der Modulanschlagsteg 25 an den beiden Enden der zweiten Profilschiene 4 gegenüber dieser vorstehend ausgebildet ist, sodass die Länge des Modulanschlagsteges 25 im Wesentlichen der Länge oder Breite des anliegenden Solarmodules 1 entspricht.

In einem weiteren Montageschritt wird nun das Solarmodul 1 mittels dem Befestigungselement 6 geklemmt. Durch das Befestigungselement 6 wird dabei sowohl das Solarmodul 1 als auch die zweite Profilschiene 4 auf die erste Profilschiene 3 angedrückt. Dadurch wird die Position der einzelnen Solarmodule fixiert.

Fig. 3 zeigt das Montagesystem 2 in einer Schnittdarstellung gemäß der Schnittlinie III - III nach Fig. 1, wobei insbesondere der Querschnitt der zweiten Profilschiene 4 ersichtlich ist. Für gleiche Teile werden wiederum gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen. Die folgende Beschreibung basiert auf einer Zusammenschau der Figuren 1 und 2.

Wie aus Fig. 3 ersichtlich, ist vorgesehen, dass an der zweiten Profilschiene 4 beidseitig des Modulanschlagsteges 25 zumindest ein Regenwasserkanal 26 ausgebildet ist. Durch den Regenwasserkanal 26 kann Wasser, welches zwischen zueinander benachbarten Solarmodulen 1 auf die zweite Profilschiene 4 gelangt, gefangen und in die Regenwasserrinne 14 der ersten Profilschiene 3 geleitet werden, wo es der Schwerkraft folgend in Richtung Traufe des Daches geleitet wird.

Die beiden Regenwasserkanäle 26 können ebenfalls durch U-förmige Profilabschnitte gebildet sein. Weiters kann vorgesehen sein, dass an den Modulanschlagsteg 25 ein erster Schenkel 27 bzw. ein zweiter Schenkel 28 anschließen. An der dem Modulanschlagsteg 25 gegenüberliegenden Seite der zweiten Profilschiene 4 kann eine Versteifungsrippe 29 ausgebildet sein.

Weiters ist es denkbar, dass der Modulanschlagsteg 25 an dessen Außenseite eine T-förmig ausgebildete Nase 30 aufweist. Die T-förmige Nase 30 kann insbesondere dazu dienen, um das Solarmodul 1 zu einem Profilradius 31 beabstandet zu halten. Der Profilradius 31 ist jener Radius, welcher sich zwischen zwei aufeinander stehenden Flächen aufgrund der Form der Stranggussmatrize ergibt.

Weiters kann, wie schematisch dargestellt, vorgesehen sein, dass an einer oder beiden Seitenflächen 32 des Modulanschlagsteges 25 ein Dichtband 33 aufgeklebt ist. Das Dichtband 33 kann dazu dienen, um das Solarmodul 1 und den Modulanschlagsteg 25 zueinander abzudichten. Dadurch kann die Wassermenge, welche zwischen zwei Solarmodulen 1 eintritt, verringert werden. Darüber hinaus können dadurch die Solarmodule 1 vor Beschädigung geschützt werden. Zusätzlich oder alternativ zum Dichtband 33 kann vorgesehen sein, dass die zwischen zwei Modulen entstehende Fuge durch eine Dichtmasse ausgefüllt wird.

Weiters kann vorgesehen sein, dass eine Steghöhe 34 geringfügig geringer gewählt ist als eine Modulhöhe 35. Dadurch kann erreicht werden, dass der Modulanschlagsteg 25 nicht über die Solarmodule 1 hinaussteht und somit kein ungünstiger Sammelpunkt von Schmutz gebildet wird. Die Steghöhe 34 kann zwischen 1 mm und 200 mm, insbesondere zwischen 30 mm und 50 mm betragen. Da bei den meisten gängigen Solarmodulen 1 die Modulhöhe 35 40 mm beträgt, hat es sich als besonders zweckdienlich erwiesen, wenn die Steghöhe 34 in etwa 38 mm beträgt, wodurch eine derart ausgebildete zweite Profilschiene 4 für alle gängigen Solarmodule 1 eingesetzt werden kann. Da auch die Länge der zweiten Profilschiene 4 beliebig ausgeführt werden kann, können verschiedene Solarmodule 1 mit verschiedenen Flächenabmessungen und auch in beliebiger Lage verbaut werden.

Wie aus Fig. 2 ersichtlich, kann weiters vorgesehen sein, dass in der ersten Profilschiene 3 ein oder mehrere Schraubenaufnahmekanäle 36 ausgebildet sind, welche zum stirnseitigen Einschrauben von Gewindeschrauben dienen. Dadurch können stirnseitig der ersten Profilschiene 3 Bleche, wie etwa Lochbleche an dieser befestigt werden.

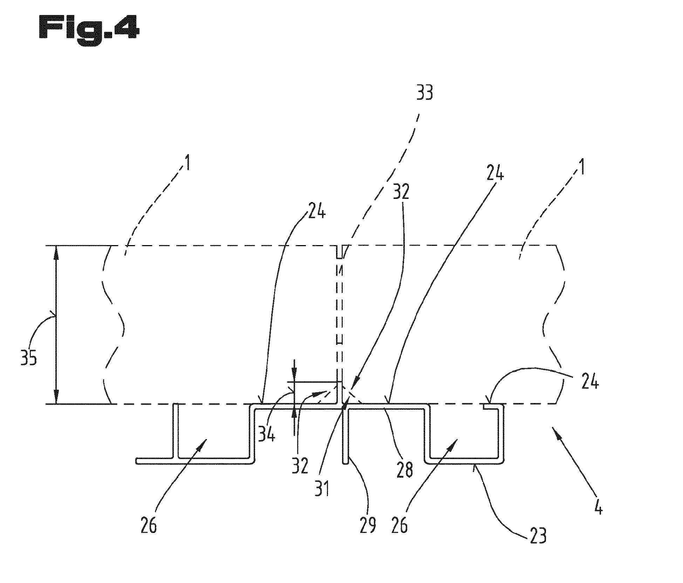

In der Fig. 4 ist eine weitere und gegebenenfalls für sich eigenständige Ausführungsform der zweiten Profilschiene 4 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich kann vorgesehen sein, dass der Modulanschlagsteg 25 eine nur geringe Steghöhe 34 aufweist, welche sich nur über einen Bruchteil der Modulhöhe 35 erstreckt.

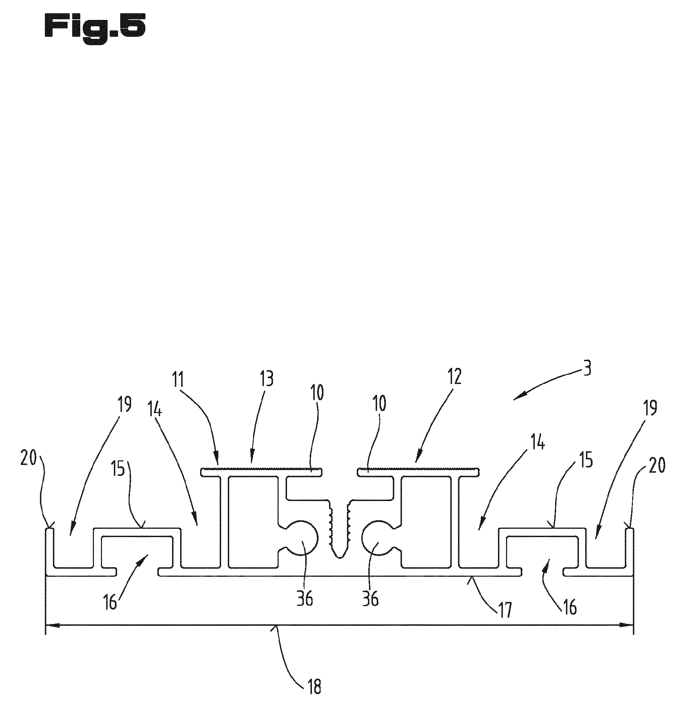

In der Fig. 5 ist eine weitere und gegebenenfalls für sich eigenständige Ausführungsform der ersten Profilschiene 3 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Die Ausführungsbeispiele zeigen mögliche Ausführungsvarianten des Montagesystems 2, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Montagesystems 2 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Solarmodul | 26 | Regenwasserkanal |
| 2 | Montagesystem | 27 | erster Schenkel |
| 3 | erste Profilschiene | 28 | zweiter Schenkel |
| 4 | zweite Profilschiene | 29 | Versteifungsrippe |
| 5 | Winkel | 30 | T-Förmig ausgebildete Nase |
| 6 | Befestigungselement | 31 | Profilradius |
| 7 | Befestigungsmittel | 32 | Seitenfläche des Modulanschlagsteges |
| 8 | Befestigungsvertiefung der ersten | | |
| | Profilschiene | 33 | Dichtband |
| 9 | Symmetrieebene | 34 | Steghöhe |
| 10 | Befestigungsvorspung | 35 | Modulhöhe |
| 11 | erster Modulauflagebereich der ersten Profilschiene | 36 | Schraubenaufnahmekanal |
| 12 | zweiter Modulauflagebereich der zweiten Profilschiene | | |
| 13 | Verzahnung | | |
| 14 | Regenwasserrinne | | |
| 15 | Profilschienenauflagefläche | | |
| 16 | Wulstförmige Erhebung | | |
| 17 | Dachauflagefläche | | |
| 18 | Breite erste Profilschiene | | |
| 19 | weitere Regenwasserrinne | | |
| 20 | weitere Profilschienenauflagefläche | | |
| 21 | Befestigungsausnehmung | | |
| 22 | Profilstärke | | |
| 23 | Schienenauflagefläche | | |
| 24 | Modulauflagefläche der zweiten Profilschiene | | |
| 25 | Modulanschlagsteg | | |

## Patentansprüche

1. Montagesystem (2) zur Montage eines Solarmoduls (1), das Montagesystem (2) umfassend:
eine erste Profilschiene (3), welche insbesondere symmetrisch bezüglich einer Symmetrieebene (9) ausgebildet ist, wobei mittig der ersten Profilschiene (3) eine Befestigungsvertiefung (8) ausgebildet ist, welche Befestigungsvertiefung (8) durch einen ersten Modulauflagebereich (11) und einen zweiten Modulauflagebereich (12) begrenzt ist,
und wobei beidseitig an der von der Befestigungsvertiefung (8) abgewandten Seite der beiden Modulauflagebereiche (11) jeweils zumindest eine Regenwasserrinne (14) und
eine Profilschienenauflagefläche (15) für eine zweite Profilschiene (4) ausgebildet ist;
die zweite Profilschiene (4) ist in einem Winkel (5) von 90° zur ersten Profilschiene (3) anordenbar, wobei die zweite Profilschiene (4) eine Schienenauflagefläche (23) aufweist welche zur Auflage der zweiten Profilschiene (4) an der ersten Profilschiene (3) ausgebildet ist, wobei die zweite Profilschiene (4) weiters eine Modulauflagefläche (24) aufweist, welche zur Aufnahme des Solarmoduls (1) ausgebildet ist,
**dadurch gekennzeichnet, dass**
die zweite Profilschiene (4) einen gegenüber der Modulauflagefläche (24) vorstehenden Modulanschlagsteg (25) aufweist, und dass beidseitig des Modulanschlagsteges (25) zumindest ein Regenwasserkanal (26) ausgebildet ist.

2. Montagesystem nach Anspruch 1, **dadurch gekennzeichnet, dass** die Modulauflagefläche (24) der zweiten Profilschiene (4) durch einen ersten Schenkel (27) und einen zweiten Schenkel (28) gebildet sind, welche beiden Schenkel (27, 28) im rechten Winkel an den Modulanschlagsteg (25) anschließen.

3. Montagesystem nach Anspruch 1 oder 2, **dadurch gekennzeichnet, dass** in der Befestigungsvertiefung (8) der ersten Profilschiene (3) zumindest zwei Befestigungsvorsprünge (10) für zwei verschiedene Arten von Befestigungsmitteln (7) ausgebildet sind.

4. Montagesystem nach einem der vorhergehenden Ansprüche, **dadurch gekennzeichnet, dass** beidseitig der Befestigungsvertiefung (8) der ersten Profilschiene (3) jeweils neben der Regenwasserrinne (14) eine weitere Regenwasserrinne (19) ausgebildet ist.

5. Montagesystem nach einem der vorhergehenden Ansprüche, **dadurch gekennzeichnet, dass** an der zweiten Profilschiene (4) an der gegenüberliegenden Seite des Modulanschlagsteges (25) eine Versteifungsrippe (29) angeordnet ist.

6. Montagesystem nach einem der vorhergehenden Ansprüche, **dadurch gekennzeichnet, dass** am Modulauflagebereich (11) der ersten Profilschiene (3) eine Verzahnung (13) ausgebildet ist.

7. Montagesystem nach einem der vorhergehenden Ansprüche, **dadurch gekennzeichnet, dass** der Modulanschlagsteg (25) an dessen von der zweiten Profilschiene (4) abgewandten Ende eine T-Förmig ausgebildete Nase (30) aufweist.

8. Montagesystem nach einem der vorhergehenden Ansprüche, **dadurch gekennzeichnet, dass** an zumindest einer Seitenfläche (32) des Modulanschlagsteges (25) ein Dichtband (33) angeordnet ist.

9. Montagesystem nach einem der vorhergehenden Ansprüche, **dadurch gekennzeichnet, dass** im zusammengebauten Zustand der Modulauflagebereich (11) der ersten Profilschiene (3) und die Modulauflagefläche (24) der zweiten Profilschiene (4) in einer gemeinsamen Ebene liegen.

10. Montagesystem nach einem der vorhergehenden Ansprüche, **dadurch gekennzeichnet, dass** die beiden Profilschienen (3) als Aluminium-Stranggussteile ausgebildet sind.
